# EUROPÄISCHE PATENTANMELDUNG

(11) **EP 4 714 414 A1**
(43) Veröffentlichungstag der Anmeldung: **25.03.2026**
(21) Anmeldenummer: 24201954.5
(22) Anmeldetag: 23.09.2024
(51) Int. Cl.: A61G 5/10, F16C 7/06

(54) **STANGENVERBINDEREINRICHTUNG ZUM VARIABLEN WINKELSTABILEN VERBINDEN VON EINER ERSTEN STANGE UND EINER ZWEITEN STANGE EINES GESTÄNGES**

(71) Anmelder: INSORS GmbH, 55595 Münchwald (DE)
(72) Erfinder: Horacek, Gregor, 56235 Ransbach-Baumbach (DE)
(74) Vertreter: Franke, Markus

(57) **Zusammenfassung**

Die Erfindung betrifft eine Stangenverbindereinrichtung (1) zum variablen winkelstabilen Verbinden von einer ersten Stange und einer zweiten Stange eines Gestänges. Ferner betrifft die Erfindung ein Verfahren zum Halten eines Endgeräts an einem Rollstuhl. Die Stangenverbindereinrichtung (1) weist auf:
- eine erste Aufnahmeeinheit (10), wobei die erste Aufnahmeeinheit (10) eine erste Stangenaufnahme (11) für die erste Stange aufweist,
- eine zweite Aufnahmeeinheit (20), wobei die zweite Aufnahmeeinheit (20) eine zweite Stangenaufnahme (21) für die zweite Stange aufweist,
wobei die erste Aufnahmeeinheit (10) und die zweite Aufnahmeeinheit (20) miteinander gekoppelt und von einer Losstellung in eine Klemmstellung überführbar sind, wobei die Aufnahmeeinheiten (10, 20) in der Losstellung um eine Drehachse (A1) zueinander drehbar sind zum Variieren eines Winkels der Aufnahmeeinheiten (10, 20) zueinander, wobei die Aufnahmeeinheiten (10, 20) in der Klemmstellung drehsicher fixiert sind.

## Beschreibung

Die Erfindung betrifft eine Stangenverbindereinrichtung zum variablen winkelstabilen Verbinden von einer ersten Stange und einer zweiten Stange eines Gestänges. Ferner betrifft die Erfindung ein Verfahren zum Halten eines Endgeräts an einem Rollstuhl. Bei den Stangen des Gestänges kann es sich um Vollstangen oder um Hohlstangen handeln. Vorzugsweise sind die erste Stange und/oder die zweite Stange als Hohlstange, insbesondere als Rohr, ausgebildet. Bei dem Gestänge kann es sich insbesondere um ein Rohrgestänge handeln.

In der technischen Rehabilitation gibt es den Bereich "Unterstützte Kommunikation". Darunter versteht man im Wesentlichen den Einsatz von digitalen Endgeräten, wie z.B. Augensteuerungen und Tabletcomputer mit Softwareapplikationen zur Sprachausgabe, die es Menschen mit eingeschränkten Kommunikationsvermögen (Sprache) ermöglicht, mit dem Umfeld zu kommunizieren. Diese Endgeräte werden mit speziellen Halterungen an einen Rollstuhl, auf einem Tisch, an einem Bett, oder auf einem Bodenständer befestigt. Die Halterungen weisen in der Regel ein Gestänge mit zumindest zwei Stangen und eine die zwei Stangen verbindende Stangenverbindereinrichtung auf. Gegebenenfalls weist die Halterung spezielle Adapter zur Anbringung des Gestänges an Rollstühlen, Bodenständern, Tischen oder Betten auf.

Die korrekte und stabile Ausrichtung bzw. Justage der Endgeräte zu der das Endgerät verwendenden Person ist wesentlich, um eine korrekte Interaktion zwischen dem Endgerät und dem Verwender und somit die korrekte und komfortable Nutzung des Endgeräts durch den Verwender zu ermöglichen. Dabei ist es notwendig, die Stangen des Gestänges, die zur Halterung des Endgeräts, beispielsweise an einem Rollstuhl und/oder einem Bett, dienen, zueinander auszurichten, wobei zu diesem Zweck eine Winkelverstellung der Stangen zueinander notwendig ist. Zu diesem Zwecke werden in der Regel Stangenverbindereinrichtungen eingesetzt, die eine erste Stange und eine zweite Stange miteinander verbinden. Derartige Stangenverbindereinrichtungen weisen in der Regel eine erste Aufnahmeeinheit und eine mit der ersten Aufnahmeeinheit gekoppelte zweite Aufnahmeeinheit auf, wobei die erste Aufnahmeeinheit eine erste Stangenaufnahme für die erste Stange aufweist und die zweite Aufnahmeeinheit eine zweite Stangenaufnahme für die zweite Stange aufweist. Die erste Aufnahmeeinheit und die zweite Aufnahmeeinheit sind dabei derart gestaltet, dass die erste Aufnahmeeinheit und die zweite Aufnahmeeinheit von einer Losstellung in eine Klemmstellung überführbar sind, wobei die Aufnahmeeinheiten in der Losstellung um eine Drehachse zueinander drehbar sind zum Variieren eines Winkels der Aufnahmeeinheiten zueinander. In der Klemmstellung sollen hingegen die Aufnahmeeinheiten drehsicher fixiert sein. Derartige Stangenverbindereinrichtungen werden häufig auch als Stangengelenke oder als 360°-Gelenke bezeichnet. Bei als Rohrgestänge ausgeführten Gestängen werden derartige Gelenke auch als Rohrgelenke bezeichnet. Bei aus dem Stand der Technik bekannten Stangenverbindereinrichtungen werden zur winkelstabilen Fixierung konzentrisch angeordnete Mehrfachrillung verwendet, wobei in der Klemmstellung die Spitzen der Mehrfachrillung der ersten Aufnahmeeinheit in die "Täler" der zweiten Aufnahmeeinheit eingreifen und/oder umgekehrt, um dadurch eine vergrößerte Reibfläche zu erzeugen. In der Praxis zeigt sich jedoch, dass die bekannten Stangenverbindereinrichtungen mit Mehrfachrillungen häufig keine ausreichende Haftreibung erzeugen, um die Stangen bei Belastung winkelstabil miteinander zu verbinden. Es hat sich gezeigt, dass die Aufnahmeeinheiten sich - insbesondere im Gegenuhrzeigersinn (bei üblichem Rechtsgewinde) - gegeneinander verdrehen können und sich dadurch der eingestellte Winkel unter Last verstellt, insbesondere wenn relativ schwere Endgeräte gehalten werden sollen und/oder wenn ein durch die erste und/oder die zweite Stange bedingter Hebelarm groß ist.

Dieser Nachteil liegt auch darin begründet, dass ein Kompromiss zwischen Verkeilwirkung zwecks Winkelfixierung in der Klemmstellung und der Notwendigkeit, die Winkelfixierung wieder einfach zu lösen, um eine Winkeleinstellung bzw. ein Verdrehen in der Losstellung zu ermöglichen, notwendig ist. Dies erfolgt häufig durch eine Geometriegestaltung der Reibflächen, die die Klemmkraft begrenzt, damit ein Überführen von der Klemmstellung in die Losstellung mit geringem Kraftaufwand erfolgen kann.

Vor diesem Hintergrund besteht die Herausforderung an eine Stangenverbindereinrichtung insbesondere darin, die Reibflächen derart zu gestalten, dass deren Haftreibung bei Klemmung groß genug ist, um den zwischen den Aufnahmeeinheiten und somit zwischen den Stangen eingestellten Winkel auch unter Last stabil zu halten, und dennoch sicherzustellen, dass die beiden Aufnahmeeinheiten sich einfach wieder aus der Klemmstellung in die Losstellung überführen lassen.

Aufgabe der vorliegenden Erfindung ist es, eine Stangenverbindereinrichtung und ein Verfahren zu schaffen, die die vorbeschriebenen Nachteile überwinden.

Gelöst werden diese Aufgaben durch die Gegenstände der unabhängigen Ansprüche. Die abhängigen Ansprüche betreffen vorteilhafte Weiterbildungen.

Die erfindungsgemäße Stangenverbindereinrichtung dient zum variablen winkelstabilen Verbinden von einer ersten Stange und einer zweiten Stange eines Gestänges miteinander. Insofern kann über die Stangenverbindereinrichtung eine Verbindung zwischen der ersten Stange und der zweiten Stange in verschiedenen Winkelstellungen erfolgen, insbesondere um eine mit einem der Stangen direkt oder indirekt verbundene Halterung in ihrer Ausrichtung und Position zu einem Verwender auszurichten und anschließend zu fixieren.

Die Stangenverbindereinrichtung weist auf:
- eine erste Aufnahmeeinheit, wobei die erste Aufnahmeeinheit eine erste Stangenaufnahme für die erste Stange aufweist,
- eine zweite Aufnahmeeinheit, wobei die zweite Aufnahmeeinheit eine zweite Stangenaufnahme für die zweite Stange aufweist.

Die erste Aufnahmeeinheit und die zweite Aufnahmeeinheit sind miteinander gekoppelt und von einer Losstellung in eine Klemmstellung überführbar, wobei die Aufnahmeeinheiten in der Losstellung um eine Drehachse zueinander drehbar sind zum Variieren eines Winkels der Aufnahmeeinheiten zueinander, wobei die Aufnahmeeinheiten in der Klemmstellung drehsicher fixiert sind. Die erste Aufnahmeeinheit weist eine erste Reibfläche auf und die zweite Aufnahmeeinheit weist eine zweite Reibfläche auf. Zumindest eine Reibfläche der ersten Reibfläche und der zweiten Reibfläche weist eine oder mehrere konzentrisch zu der Drehachse verlaufende Federn auf und die andere der ersten Reibfläche und der zweiten Reibfläche weist eine oder mehrere konzentrisch zu der Drehachse verlaufende, zu der einen oder den mehreren Federn korrespondierende Nuten auf. In der Klemmstellung sind die erste Aufnahmeeinheit und die zweite Aufnahmeeinheit entlang der Drehachse aneinander gepresst, derart, dass die eine oder die mehreren Federn der jeweiligen Reibfläche kraftschlüssig mit den einen oder den mehreren Nuten der jeweils anderen Reibfläche zusammenwirken zum drehsicheren Fixieren der Aufnahmeeinheiten. Zwischen der ersten Aufnahmeeinheit und der zweiten Aufnahmeeinheit ist eine parallel zu der Drehachse wirkende Rückstelleinrichtung angeordnet, wobei die Rückstelleinrichtung ein oder mehrere Federkraftelemente umfasst, wobei das Überführen der ersten Aufnahmeeinheit und der zweiten Aufnahmeeinheit von der Losstellung in die Klemmstellung entgegen der Federkraft des einen oder der mehreren Federkraftelemente erfolgt.

Durch die vorbeschriebene Gestaltung der Reibflächen in Kombination mit der Rückstelleinrichtung kann eine mechanisch besonders stabile Fixierung der ersten Aufnahmeeinheit zu der zweiten Aufnahmeeinheit in der Klemmstellung erreicht werden, wobei aufgrund der Rückstellkraft der Rückstelleinrichtung basierend auf der Federkraft des einen oder der mehreren Federkraftelemente ein Überführen der Stangenverbindereinrichtung von der Klemmstellung in die Losstellung unterstützt wird, sodass ein Überführen der Stangenverbindereinrichtung von der Klemmstellung in die Losstellung ohne oder jedenfalls mit geringem Kraftaufwand möglich ist, trotz der zum Winkelfixieren notwendigen hohen Reibung zwischen den Reibflächen in der Klemmstellung.

Insbesondere ist vorgesehen, dass die erste Reibfläche zumindest eine Nut aufweist und die zweite Reibfläche eine zu der zumindest einen Nut korrespondierende Feder aufweist. Die erste Reibfläche kann zumindest eine Feder aufweisen und die zweite Reibfläche kann eine zu der zumindest einen Feder korrespondierende Nut aufweisen. Insbesondere weist die erste Reibfläche zumindest eine Nut und zumindest eine Feder auf und die zweite Reibfläche weist eine zu der zumindest einen Nut korrespondierende Feder und eine zu der zumindest einen Feder korrespondierende Nut auf.

Bei der ersten Stange und/oder der zweiten Stange kann es sich um eine Vollstange oder um eine Hohlstange handeln. Vorzugsweise sind die erste Stange und/oder die zweite Stange als Hohlstange, insbesondere als Rohr, ausgebildet. Bei dem Gestänge kann es sich insbesondere um ein Rohrgestänge handeln.

Die erste und die zweite Stange weisen vorzugsweise, aber nicht notwendiger Weise, einen runden Querschnitt auf.

Unter einer konzentrischen Feder wird insbesondere ein entlang einer Kreisbahn umlaufender Vorsprung und unter einer konzentrischen Nut ein entlang einer Kreisbahn umlaufender Rücksprung verstanden.

Vorzugsweise laufen die Feder und die Nut zu, insbesondere keilförmig zu, vorzugsweise konisch zu.

In einer besonders bevorzugten Ausführungsform ist vorgesehen, dass die erste Aufnahmeeinheit und/oder die zweite Aufnahmeeinheit eine Fixiereinrichtung zum klemmenden Fixieren der in der jeweiligen Stangenaufnahme aufgenommenen Stange entlang einer Längsachse der jeweiligen Stange aufweist. Die Fixierung kann beispielsweise durch ein separates Fixierelement, wie beispielsweise eine Klemmschraube, erfolgen.

Es wird als besonders vorteilhaft angesehen, wenn der Winkel zwischen der ersten Aufnahmeeinheit und der zweiten Aufnahmeeinheit stufenlos einstellbar ist. Insbesondere wird es in diesem Zusammenhang als vorteilhaft angesehen, wenn die Reibflächen frei von radial verlaufenden Profilierungen oder dergleichen sind. Derartige Profilierungen sind zwar grundsätzlich vorteilhaft in Hinblick auf eine Verdrehsicherung in der Klemmstellung. Allerdings verhindern derartige Profilierungen eine stufenlose Verdrehung um die Drehachse und somit eine stufenlose Einstellung des Winkels zwischen den Aufnahmeeinheiten. Durch derartige radial verlaufenden Profilierungen ist der Verwender hinsichtlich der Winkellage der ersten Aufnahmeeinheit zu der zweiten Aufnahmeeinheit und somit der Winkellage der ersten Stange zu der zweiten Stange eingeschränkt, sodass gegebenenfalls keine optimale Einstellung eines über das Gestänge gelagerten Endgeräts zu dem Verwender möglich ist.

Um eine besonders hohen Klemmkraft beziehungsweise Presskraft zwischen der ersten Reibfläche und der zweiten Reibfläche in der Klemmstellung zu erreichen und dennoch ein Lösen der Reibflächen voneinander beim Überführen der Stangenverbindereinrichtung von der Klemmstellung in die Losstellung zu gewährleisten, wird es als vorteilhaft angesehen, wenn die Rückstelleinrichtung ein Tellerfederpaket mit mehreren als Tellerfedern ausgebildeten Federkraftelementen aufweist.

Um das Überführen der ersten Aufnahmeeinheit und der zweiten Aufnahmeeinheit von der Losstellung in die Klemmstellung zu vereinfachen, wird es als vorteilhaft angesehen, wenn die Stangenverbindereinrichtung eine Betätigungseinrichtung aufweist zum Überführen der ersten Aufnahmeeinheit und der zweiten Aufnahmeeinheit von der Losstellung in die Klemmstellung entlang der Drehachse und Halten der Aufnahmeeinheiten in der Klemmenstellung entgegen der Federkraft des einen oder der mehreren Federkraftelemente, wobei die Betätigungseinrichtung ein die erste Aufnahmeeinheit entlang der Drehachse durchsetzendes Achselement aufweist.

Vorzugsweise ist die erste Aufnahmeeinheit in der Losstellung drehbar auf dem Achselement gelagert.

Im Zusammenhang mit einer Betätigungseinrichtung wird es als vorteilhaft angesehen, wenn das Achselement einen Gewindeabschnitt aufweist, wobei die zweite Aufnahmeeinheit einen Gegengewindeabschnitt aufweist, wobei das Achselement mit seinem Gewindeabschnitt in den Gegengewindeabschnitt eingeschraubt ist, wobei eine Achse des Achselements mit der Drehachse zusammenfällt.

Das Achselement kann beispielsweise als Schraube ausgebildet sein. Dabei ist es durchaus denkbar, dass die Schraube einen Schraubenkopf mit einem Werkzeugeingriff aufweist, wobei dieser Schraubenkopf auf einer der zweiten Aufnahmeeinheit abgewandten Seite der ersten Aufnahmeeinheit freiliegt, um auf diese Weise ein zu dem Werkzeugeingriff passendes Werkzeug in den Werkzeugeingriff einzuführen. Bei dem Werkzeugeingriff kann es sich beispielsweise um einen Innensechskant handeln. Es sind aber auch andere Arten von Werkzeugeingriffen denkbar.

In einer weiteren Ausführungsform ist vorgesehen, dass die Betätigungseinrichtung einen mit dem Achselement zusammenwirkenden Betätigungshebel aufweist zum Überführen der ersten Aufnahmeeinheit und der zweiten Aufnahmeeinheit von der Losstellung in die Klemmstellung.

Der Betätigungshebel kann insbesondere dazu dienen, ein mit einem Gewindeabschnitt versehenes Achselement um seine Achse zu drehen, um das Achselement in den Gegengewindeabschnitt der zweiten Aufnahmeeinheit einzuschrauben zwecks Überführens der Aufnahmeeinheiten von der Losstellung in die Klemmstellung. Umgekehrt kann das Achselement in die entgegengesetzte Richtung gedreht werden, um den Gewindeabschnitt des Achselements aus dem Gegengewindeabschnitt der zweiten Aufnahmeeinheit herauszuschrauben, um die Aufnahmeeinheiten freizugeben, sodass die Rückstelleinrichtung die Aufnahmeeinheiten von der Klemmstellung in die Losstellung überführen kann.

Vorzugsweise ist die erste Aufnahmeeinheit entlang der Drehachse verschiebbar auf dem Achselement gelagert. Insbesondere weist die erste Aufnahmeeinheit eine gewindefreie Durchgangsöffnung für das Achselement auf.

Als besonders vorteilhaft wird es angesehen, wenn der Betätigungshebel als Exzenterhebel ausgebildet ist.

Bei einer solchen Gestaltung wird es als besonders vorteilhaft angesehen, wenn die Betätigungseinrichtung in Art eines Schnellspanners bzw. einer Schnellspannvorrichtung, wie sie beispielsweise zur Fixierung von Sattelrohren oder Laufräder bei Fahrrädern bekannt sind, ausgebildet ist.

In einer besonders bevorzugten Ausführungsform ist vorgesehen, dass es sich bei einem Material der ersten Aufnahmeeinheit und der zweiten Aufnahmeeinheit um ein metallisches Material, insbesondere um Aluminium, handelt. Die Verwendung eines metallischen Materials hat sich als vorteilhaft erwiesen, um die notwendigen Kräfte beschädigungsfrei und deformationsfrei zu halten.

In einer besonders bevorzugten Ausführungsform ist vorgesehen, dass das Achselement das eine oder die mehreren Federkraftelemente, beispielweise die Tellerfedern des Tellerfederpakets, durchsetzt. Durch eine derartige Gestaltung ist die Montage der Stangenverbindereinrichtung erleichtert und zudem sind das eine oder die mehreren Federkraftelemente über das Achselement in ihrer radialen Lage zueinander gesichert ohne dass zusätzliche Lageelemente verwendet werden müssen. Auf diese Weise kommt dem Achselement in vorteilhafter Art und Weise eine Doppelfunktion zu.

In einer besonders bevorzugten Ausführungsform ist vorgesehen, dass das eine oder die mehreren Federkraftelemente an dem Achselement axial gesichert sind. Dadurch sind bei einer Montage und Demontage der Stangenverbindereinrichtung das eine oder die mehreren Federkraftelemente verliersicher an dem Achselement gelagert.

Die axiale Sicherung des einen oder der mehreren Federkraftelemente an dem Achselement kann beispielsweise dadurch erfolgen, dass auf das Achselement endseitig ein O-Ring aufgeschoben ist, der elastisch verformbar ist und dadurch in der axialen Richtung kraftschlüssig und formschlüssig an dem Achselement gehalten ist und auf diese Weise einen Anschlag für das eine oder die mehreren Federkraftelemente in der axialen Richtung bildet.

Es wird als besonders vorteilhaft angesehen, wenn die erste Aufnahmeeinheit und/oder die zweite Aufnahmeeinheit eine in Richtung der jeweils anderen Aufnahmeeinheit offene Lagertasche für das eine oder die mehreren Federkraftelemente aufweist. Die Lagertasche kann beispielsweise in Form eines Sacklochs ausgebildet sein. Die Lagertasche, insbesondere das Sackloch, ist vorzugsweise konzentrisch zu einer von dem Achselement der Betätigungseinrichtung durchsetzten Durchgangsöffnung der jeweiligen Aufnahmeeinheit ausgebildet.

Als besonders vorteilhaft wird es angesehen, wenn in der Klemmstellung die erste Aufnahmeeinheit und die zweite Aufnahmeeinheit durch eine Selbsthemmung der einen oder der mehreren Federn in der einen oder den mehreren Nuten verdrehsicher gehalten sind. Beispielweise kann die Selbsthemmung dadurch bewirkt sein, dass die einen oder die mehreren Federn im Querschnitt keilförmig ausgebildet sind und/oder die einen oder die mehreren Nuten im Querschnitt keilförmig ausgebildet sind. In diesem Zusammenhang wird es als besonders vorteilhaft angesehen, wenn die entsprechenden Keilwinkel derart sind, dass die in der Klemmstellung aneinander anliegenden Flanken der einen oder mehreren Federn und der einen oder der mehreren Nuten in Art eines Morsekegels zusammenwirken.

Als besonders vorteilhaft wird es angesehen, wenn die eine oder die mehreren

Federn im Querschnitt keilförmig ausgebildet sind mit einem ersten Keilwinkel, wobei der erste Keilwinkel von 10° bis 30°, vorzugsweise 12° bis 16°, beträgt, und/oder wobei die eine oder die mehreren Nuten im Querschnitt keilförmig ausgebildet sind mit einem zweiten Keilwinkel, wobei der zweite Keilwinkel von 10° bis 30°, vorzugsweise 12° bis 16°, beträgt. Die vorgenannten Bereiche für den ersten Keilwinkel und den zweiten Keilwinkel haben sich als besonders vorteilhaft erwiesen, um in der Klemmstellung einen ausreichenden Kraftschluss und dadurch eine ausreichende Haftreibung zu erzeugen, um eine hohe Verdrehsicherheit der ersten Aufnahme zu der zweiten Aufnahme um die Drehachse in der Klemmstellung zu erreichen.

Es wird als besonders vorteilhaft angesehen, wenn der erste Keilwinkel und der zweite Keilwinkel betragsmäßig gleich groß sind.

In einer besonders bevorzugten Ausführungsform ist vorgesehen, dass die eine oder die mehreren Federn im Querschnitt kegelstumpfförmig ausgebildet sind und/oder wobei die eine oder die mehreren Nuten im Querschnitt kegelstumpfförmig ausgebildet sind. Durch diese Gestaltung wird eine Beschädigung der einen oder der mehreren Federn bei der Verwendung der Stangenverbindereinrichtung vermieden. Bei spitz zulaufenden Federn besteht die Gefahr, dass die Spitzen verbiegen oder gar abbrechen, wodurch die Funktion der Feder bzw. der mehreren Federn beeinträchtigt sein kann. Bei spitz zulaufenden Nuten besteht die Gefahr, dass sich Fremdkörper in der jeweiligen Nut festsetzen, wodurch wiederum die Funktion der Nuten beim Zusammenwirken mit den Federn beeinträchtigt sein kann, nämlich dahingehend, dass die Federn nicht mehr ausreichend tief in die Nuten einführbar sind aufgrund von in den Nuten festgesetzten Verschmutzungen. Dies kann zur Folge haben, dass keine ausreichende Haftreibung bzw. kein ausreichender Kraftschluss zwischen der jeweiligen Feder und der jeweiligen Nut in der Klemmstellung bewirkt ist oder die Feder beim Überführen der Stangenverbindereinrichtung von der Losstellung in die Klemmstellung aufgrund der Verschmutzung beschädigt wird.

In einer besonders bevorzugten Ausführungsform ist vorgesehen, dass die eine oder die mehreren Nuten einen Nutboden aufweisen, wobei in der Klemmstellung die einen oder die mehreren Federn in einer Richtung parallel zu der Drehachse von dem Nutboden der einen oder der mehreren Nuten beabstandet sind. Dadurch ist zum einen sichergestellt, dass die eine oder die mehreren Federn in der axialen Richtung der Drehachse ausreichend tief in die Nuten einführbar sind, sodass die gewinkelt zu der Drehachse verlaufenden Flanken der Federn mit den die Nut begrenzenden Flanken zur Anlage kommen, um den Kraftschluss bzw. Reibschluss zu bewirken. Ein Abstand von den Federn zu dem Nutboden in der axialen Richtung der Drehachse ist auch dahingehend als vorteilhaft anzusehen, dass etwaige Verschmutzungen im Bereich des Bodens ein ausreichendes axiales Einführen der Federn in die Nuten nicht beeinträchtigen.

In einer besonders bevorzugten Ausführungsform ist vorgesehen, dass die Stangenaufnahme der ersten Aufnahmeeinheit und/oder dass die Stangenaufnahme der zweiten Aufnahmeeinheit eine von einer umlaufende Wandung begrenzte Aufnahmeöffnung für die jeweilige Stange aufweisen, wobei die Wandung geschlitzt ausgebildet ist, um ein Verengen der Aufnahmeöffnung zu ermöglichen zwecks klemmender Fixierung der jeweiligen Stange in der jeweiligen Aufnahmeeinheit.

Es wird als besonders vorteilhaft angesehen, wenn die erste Reibfläche zumindest eine Feder und zumindest eine Nut aufweist und die zweite Reibfläche dazu korrespondierend zumindest eine Feder und zumindest eine Nut aufweist.

Als besonders vorteilhaft wird es angesehen, wenn die jeweilige Feder als Ringkeilfeder ausgebildet ist und die jeweilige Nut als Ringkeilnut ausgebildet ist und dementsprechend zueinander keilförmig geneigte Flanken aufweisen. Vorzugsweise sind die Kontaktflächen zwischen der jeweiligen Feder und der jeweiligen Nut durch die Flanken gebildet und insbesondere nicht durch die Stirnfläche der jeweiligen Feder und den Nutboden der jeweiligen Nut gebildet.

Es wird als besonders vorteilhaft angesehen, wenn ein Hubweg zwischen der Klemmstellung und der Losstellung entlang der Drehachse zumindest 1 mm beträgt, vorzugsweise zwischen 1 mm und 3 mm beträgt. Vorzugsweise ist eine Höhe der Feder und eine Höhe der Nut größer als der Hubweg, um einen stirnseitigen Kontakt zwischen der Feder und der Nut zu vermeiden.

Vorzugsweise ist die jeweilig Stangenaufnahme dazu eingerichtet, eine Stange mit einem Durchmesser von 8 mm bis 30 mm aufzunehmen.

Um einen beim Drehen um die Drehachse zwischen der Drehachse und den zusammenwirkenden Nuten und Federn wirksamen Hebelarm besonders groß zu gestalten, wird es als vorteilhaft angesehen, wenn die Nuten und Federn in einem radial äußeren Bereich der jeweiligen Reibfläche ausgebildet sind.

Das erfindungsgemäße Verfahren dient zum Halten eines Endgeräts an einem Rollstuhl. Dabei ist vorgesehen, dass zum Halten des Endgeräts ein Gestänge an dem Rollstuhl befestigt wird, wobei das Gestänge zumindest eine erste Stange und eine zweite Stange aufweist, wobei die erste Stange und die zweite Stange über eine erfindungsgemäße Stangenverbindereinrichtung miteinander verbunden sind. Die obigen Ausführungen zu den Vorteilen und vorteilhaften Weiterbildungen der Stangenverbindereinrichtung gelten entsprechend für das Verfahren und umgekehrt.

In den nachfolgenden Figuren wird die Erfindung anhand von Ausführungsbeispielen näher erläutert, ohne auf diese beschränkt zu sein. Es zeigen:
- Figur 1: eine Anordnung von einer ersten Stange und einer zweiten Stange, wobei die erste und die zweite Stange mittels einer ersten Ausführungsform einer Stangenverbindereinrichtung miteinander verbunden sind, in einer perspektivischen Ansicht,
- Figur 2: die Stangenverbindereinrichtung gemäß Figur 1 in einer Explosionsdarstellung,
- Figur 3: die Stangenverbindereinrichtung gemäß Figur 2 in einer Explosionsdarstellung in einer Seitenansicht,
- Figur 4: die Stangenverbindereinrichtung in einer Schnittansicht gemäß der Linie A-A in Figur 3,
- Figur 5: ein Teilbereich der Figur 4 in einer vergrößerten Darstellung,
- Figur 6: die Stangenverbindereinrichtung gemäß Figur 2 in einer Schnittansicht in einer Losstellung,
- Figur 7: die Stangenverbindereinrichtung gemäß Figur 2 in einer Schnittansicht in einer Klemmstellung,
- Figur 8: ein Tellerfederpaket der Stangenverbindereinrichtung gemäß Figur 2 in einer Explosionsdarstellung,
- Figur 9: das Tellerfederpaket in einer Schnittansicht gemäß der Linie A-A in Figur 8,
- Figur 10: eine Anordnung von einem Rollstuhl und einem an dem Rollstuhl über ein Gestänge befestigten Endgerät,
- Figur 11: eine Anordnung von einer ersten Stange und einer zweiten Stange, wobei die erste und die zweite Stange mittels einer zweiten Ausführungsform einer Stangenverbindereinrichtung miteinander verbunden sind, in einer perspektivischen Ansicht,

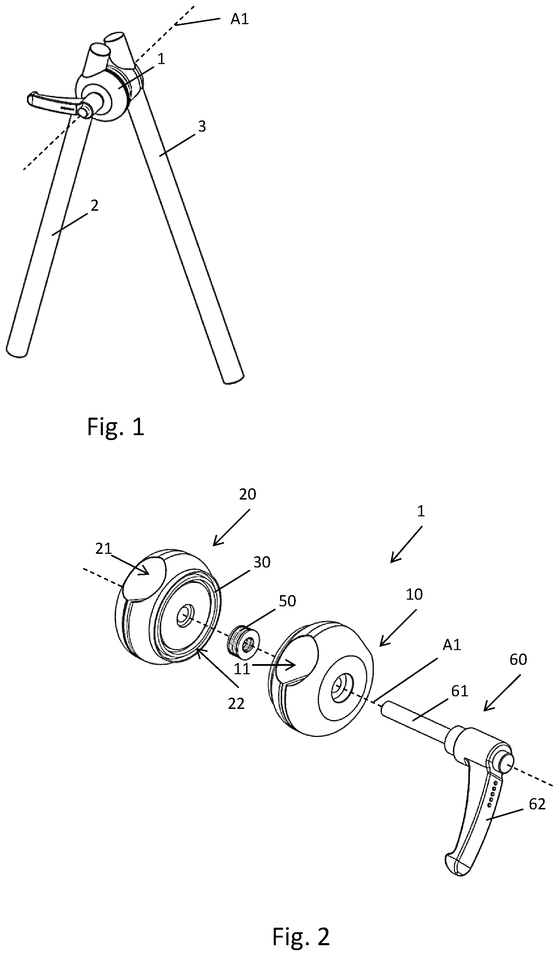

Die Figuren 1 bis 7 zeigen eine erste Ausführungsform einer Stangenverbindereinrichtung 1. Die Figur 1 zeigt dabei eine Anordnung von einer als Rohr ausgebildeten ersten Stange 2 und einer als Rohr ausgebildeten zweiten Stange 3, wobei die erste Stange 2 und die zweite Stange 3 über die Stangenverbindereinrichtung 1 miteinander verbunden sind.

Die Stangenverbindereinrichtung 1 dient zum variablen winkelstabilen Verbinden der ersten Stange 2 mit der zweiten Stange 3. Die Stangenverbindereinrichtung 1 ermöglicht die Winkelstellung zwischen der ersten Stange 2 und der zweiten Stange 3 um die Drehachse A1 stufenlos zu verändern, um einen gewünschten Winkel zwischen der ersten Stange 2 und der zweiten Stange 3 einzustellen und anschließend den eingestellten Winkel zu fixieren.

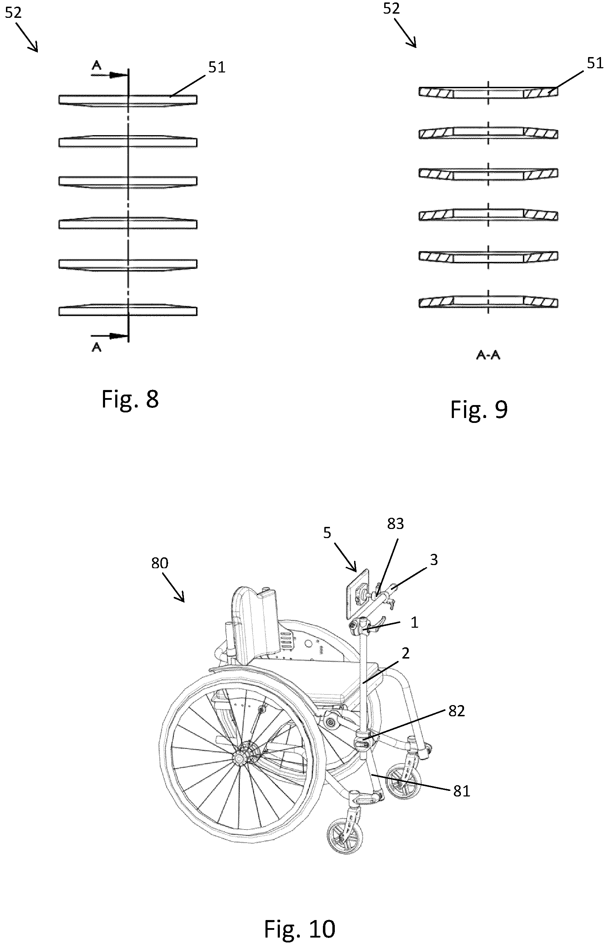

Ein beispielhaftere Anwendungsbereich der Anordnung, wie sie in der Figur 1 gezeigt ist, ist in der Figur 10 gezeigt. Dabei dient die Anordnung gemäß Figur 1 zur Befestigung eines Endgeräts 5 an einem Rollstuhl 80. Dabei ist die erste Stange 2 über eine abklappbare Verbindungseinrichtung 82 mit einem Gestell 81 des Rollstuhls 80 verbunden. An der zweiten Stange 3, die über die Stangenverbindereinrichtung 1 mit der ersten Stange 2 verbunden ist, ist eine Endgerätehalterung 83 angebracht. Die Endgerätehalterung 83 weist eine Lageraufnahme für das Endgerät 5 auf. Das Endgerät 5, bei dem es sich vorliegend um einen Tabletcomputer handelt, ist in der Lageraufnahme aufgenommenen und dadurch bezüglich des Rollstuhls 80 lagefixiert.

Die erste Ausführungsform der Stangenverbindereinrichtung 1 ist in den Figuren 2 bis 7 näher dargestellt. Die Stangenverbindereinrichtung 1 weist eine erste Aufnahmeeinheit 10 auf, wobei die erste Aufnahmeeinheit 10 eine erste Stangenaufnahme 11 für die erste Stange 2 aufweist. Die Stangenverbindereinrichtung 1 weist ferner eine zweite Aufnahmeeinheit 20 auf, wobei die zweite Aufnahmeeinheit 20 eine zweite Stangenaufnahme 21 für die zweite Stang 3 aufweist. Die erste und die zweite Stangenaufnahme 11, 21 sind jeweils als im Querschnitt kreisrunde Durchgangsöffnungen ausgebildet, wobei die jeweilige Aufnahmeeinheit 10, 20 geschlitzt ausgebildet ist, um ein Verengen der Durchgangsöffnungen zu ermöglichen zwecks klemmender Fixierung der jeweiligen Stange 2, 3 in der Stangenaufnahme 11, 21.

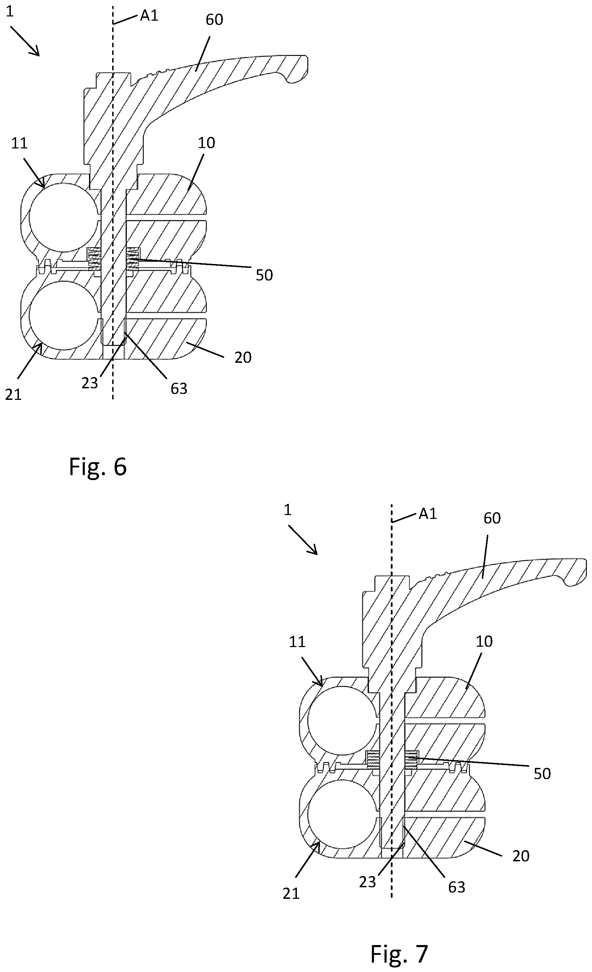

Die erste Aufnahmeeinheit 10 und die zweite Aufnahmeeinheit 20 sind mechanisch miteinander gekoppelt durch eine Betätigungseinrichtung 60. Die Betätigungseinrichtung 60 weist ein Achselements 61 auf, wobei das Achselement 61 die erste Aufnahmeeinheit 10 durchsetzt, derart, dass die Aufnahmeeinheit 10 um die Drehachse A1 drehbar auf dem Achselement 61 gelagert ist. Das Achselement 61 weist einen Gewindeabschnitt 63 auf, wobei die zweite Aufnahmeeinheit 20 einen zu dem Gewindeabschnitt 63 korrespondierenden Gegengewindeabschnitt 23 aufweist, wobei das Achselement 61 mit seinem Gewindeabschnitt 63 in den Gegengewindeabschnitt 23 eingeschraubt ist, wie insbesondere den Figur 6 und 7 zu entnehmen ist. Über die Betätigungseinrichtung 60 können die erste Aufnahmeeinheit 10 und die zweite Aufnahmeeinheit 20 entlang der Drehachse A1 durch Einschrauben des Achselements 61 in den Gegengewindeabschnitt 23 der zweiten Aufnahmeeinheit 20 aufeinander zu bewegt, dadurch zusammengepresst und auf diese Weise von einer Losstellung in eine Klemmstellung überführt werden, wie nachfolgend näher beschrieben wird.

Die Figur 7 zeigt die Aufnahmeeinheiten 10, 20 in ihrer Klemmstellung. Die Figur 6 zeigt die Aufnahmeeinheiten 10, 20 in ihrer Losstellung. Die Klemmstellung unterscheidet sich von der Losstellung dadurch, dass in der Klemmstellung das Achselement 61 weiter in die zweite Aufnahmeeinheit 20 eingeschraubt ist, wodurch die erste Aufnahmeeinheit 10 und die zweite Aufnahmeeinheit 20 entlang der Drehachse A1 zusammen gepresst werden. In der Losstellung hingegen ist das Achselement 61 weniger weit in die zweite Aufnahmeeinheit 20 eingeschraubt, sodass die erste Aufnahmeeinheit 10 und die zweite Aufnahmeeinheit 20 entlang der Drehachse A1 nicht zusammengepresst sind. Um das Einschrauben und das Herausschrauben des Achselements 61 aus der zweiten Aufnahmeeinheit 20 zu erleichtern, weist die Betätigungseinrichtung 60 einen Betätigungshebel 62 auf. Häufig wird eine solche Ausgestaltung der Betätigungseinrichtung im Zusammenhang mit Stangenverbindereinrichtung auch mit dem Begriff "Klemmhebel" bezeichnet.

In der Klemmstellung sind eine erste Reibfläche 12 der ersten Aufnahmeeinheit 10 und eine zweite Reibfläche 22 der zweiten Aufnahmeeinheit 20 derart miteinander in Kontakt, dass die Aufnahmeeinheiten 10, 20 in der Klemmstellung drehsicher zueinander fixiert sind. Dementsprechend sind in der Klemmstellung die erste Aufnahmeeinheit 10 und die zweite Aufnahmeeinheit 20 winkelstabil zueinander fixiert durch kraftschlüssiges Zusammenwirken der ersten Reibfläche 12 und der zweiten Reibfläche 22. In der Losstellung hingegen sind die erste Reibfläche 12 und die zweite Reibfläche 22 in der axialen Richtung der Drehachse A1 voneinander beanstandet, wodurch ein Verdrehen der Aufnahmeeinheiten 10, 20 zueinander um die Drehachse A1 in der Losstellung ermöglicht ist, um einen Winkel zwischen den Aufnahmeeinheiten 10, 20 zu variieren.

Um eine besonders hohe Haftreibung in der Klemmstellung zwischen der ersten Reibfläche 12 und der zweiten Reibfläche 22 zu erreichen, weist die erste Reibfläche 12 eine konzentrisch zu der Drehachse A1 verlaufende Nut 40 auf. Die zweite Reibfläche 22 weist eine zu der Nut 40 korrespondierende, konzentrisch zu der Drehachse A1 verlaufende Feder 30 auf.

In der Klemmstellung, die in der Figur 7 dargestellt ist, sind die erste Aufnahmeeinheit 10 und die zweite Aufnahmeeinheit 20 durch die Betätigungseinrichtung 60 entlang der Drehachse A1 derart aneinandergepresst, dass die Feder 30 der zweiten Reibfläche 22 in die Nut 40 der ersten Reibfläche 12 eingefahren ist, derart, dass Flanken der Feder 30 an den Flanken der Nut 40 flächig anliegen, wodurch ein Kraftschluss zwischen der Feder 30 und der Nut 40 bewirkt ist zum drehsicheren Fixieren der Aufnahmeeinheiten 10, 20 in der beim Überführen in die Klemmstellung vorliegenden Winkelstellung.

Um bei einem Herausschrauben der Betätigungseinrichtung 60 aus der zweiten Aufnahmeeinheit 20 sicherzustellen, dass sich auch die miteinander in Eingriff befindlichen Reibfläche 12, 22 wieder voneinander lösen, ist zwischen der ersten Aufnahmeeinheit 10 und der zweiten Aufnahmeeinheit 20 eine parallel zu der Drehachse A1 wirkende Rückstelleinrichtung 50 angeordnet. Die Rückstelleinrichtung 50 umfasst vorliegend sechs als Tellerfedern ausgebildeten Federkraftelemente 51, wobei die Tellerfedern ein Tellerfederpaket 52 bilden. Das Tellerfederpaket 52 ist in einer in der ersten Aufnahmeeinheit 10 ausgebildeten Lagertasche 15 gelagert, wobei die Lagertasche 15 in Richtung der zweiten Aufnahmeeinheit 20 offen ist. Das Achselement 61 durchsetzt die Tellerfedern des Tellerfederpakets 52 und das Tellerfederpaket 52 stützt sich mit seinem einen Ende an der ersten Aufnahmeeinheit 10 in der axialen Richtung der Drehachse A1 ab und mit seinem anderen Ende an der zweiten Aufnahmeeinheit 20 in der axialen Richtung der Drehachse A1 ab. Die Tellerfedern des Tellerfederpakets 52 sind in der Klemmstellung entgegen der Federkraft des Tellerfederpakets 52 komprimiert. Dementsprechend erfolgt ein Überführen der ersten Aufnahmeeinheit 10 und der zweiten Aufnahmeeinheit 20 von der Losstellung in die Klemmstellung entgegen der Federkraft des Tellerfederpakets 52. Dadurch wird erreicht, dass beim Herausschrauben der Betätigungseinrichtung 60 die erste Aufnahmeeinheit 10 und die zweite Aufnahmeeinheit 20 durch das Tellerfederpaket 52 entlang der Drehachse A1 auseinandergepresst werden, um die Nut 40 und die Feder 30 außer Eingriff zu bringen und dadurch die Aufnahmeeinheiten 10, 20 wieder in die Losstellung zu überführen oder zumindest ein Überführen in die Losstellung zu unterstützen.

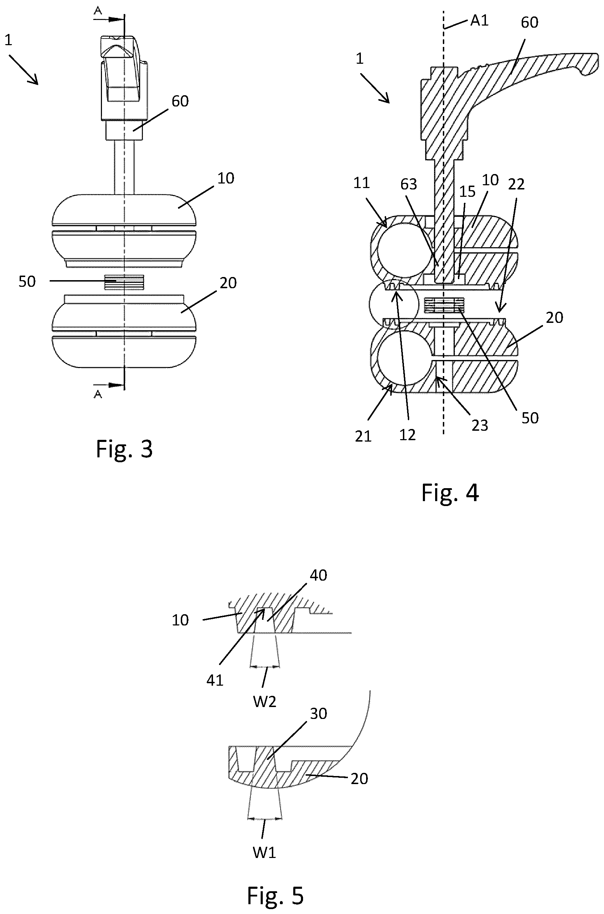

Wie insbesondere der Figur 5 zu entnehmen ist, ist die Feder 30 im Querschnitt keilförmig ausgebildet mit einem ersten Keilwinkel W1, wobei dieser erste Keilwinkel W1 vorliegend 14° beträgt. Die Nut 40 ist im Querschnitt ebenfalls keilförmig ausgebildet mit einem zweiten Keilwinkel W2, wobei dieser zweite Keilwinkel W2 betragsmäßig identisch groß ist wie der erste Keilwinkel W1 und dementsprechend ebenfalls 14° beträgt.

Wie insbesondere der Figur 7 zu entnehmen ist, sind die Nut 40 und die Feder 30 derart gestaltet, dass in der Klemmstellung die Feder 30 in der axialen Richtung der Drehachse A1 von einem Nutboden 41 der Nut 40 beanstandet ist.

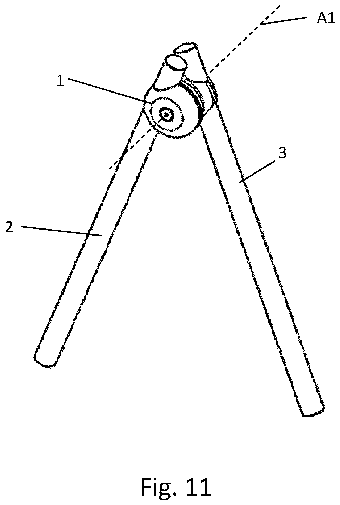

Die Figur 11 zeigt analog zu der Figur 1 eine Anordnung von einer ersten Stange 2 und einer zweiten Stange 3, wobei die Stangen 2, 3 über eine zweite Ausführungsform der Stangenverbindereinrichtung 1 miteinander verbunden sind. Die zweite Ausführungsform der Stangenverbindereinrichtung 1 unterscheidet sich von der ersten Ausführungsform der Stangenverbindereinrichtung 1 gemäß der Figuren 1 bis 7 im Wesentlichen durch die Gestaltung der Betätigungseinrichtung 60. Bei der in der Figur 11 gezeigten zweiten Ausführungsform weist die Betätigungseinrichtung 60 wiederum ein Achselement 61 auf, wobei dieses Achselements 61 vorliegend als Schraube mit einem Schraubenkopf ausgebildet ist. Dementsprechend weist die Betätigungseinrichtung 60 keinen Betätigungshebel 62 auf. Zum Drehen der Schraube weist der Schraubenkopf einen Werkzeugeingriff auf, der von einer der zweiten Aufnahmeeinheit 20 abgewandten Seite der ersten Aufnahmeeinheit 10 zugänglich ist. Der Werkzeugeingriff ist vorliegend als Innensechskant ausgebildet.

### Bezugszeichenliste

- 1: Stangenverbindereinrichtung
- 2: erstes Stange
- 3: zweites Stange
- 5: Endgerät
- 10: erste Aufnahmeeinheit
- 11: erste Stangenaufnahme
- 12: erste Reibfläche
- 20: zweite Aufnahmeeinheit
- 21: zweite Stangenaufnahme
- 22: zweite Reibfläche
- 23: Gegengewindeabschnitt
- 30: Feder
- 40: Nut
- 41: Nutboden
- 50: Rückstelleinrichtung
- 51: Federkraftelementen
- 52: Tellerfederpaket
- 60: Betätigungseinrichtung
- 61: Achselement
- 62: Betätigungshebel
- 63: Gewindeabschnitt
- 80: Rollstuhl
- 81: Gestell
- 82: Verbindungseinrichtung
- 83: Endgerätehalterung

- A1: Drehachse
- W1: erster Keilwinkel
- W2: zweiter Keilwinkel

## Patentansprüche

1. Stangenverbindereinrichtung (1) zum variablen winkelstabilen Verbinden von einer ersten Stange (2) und einer zweiten Stange (3) eines Gestänges miteinander, wobei die Stangenverbindereinrichtung (1) aufweist:
- eine erste Aufnahmeeinheit (10), wobei die erste Aufnahmeeinheit (10) eine erste Stangenaufnahme (11) für die erste Stange (2) aufweist,
- eine zweite Aufnahmeeinheit (20), wobei die zweite Aufnahmeeinheit (20) eine zweite Stangenaufnahme (21) für die zweite Stange (3) aufweist,
wobei die erste Aufnahmeeinheit (10) und die zweite Aufnahmeeinheit (20) miteinander gekoppelt und von einer Losstellung in eine Klemmstellung überführbar sind, wobei die Aufnahmeeinheiten (10, 20) in der Losstellung um eine Drehachse (A1) zueinander drehbar sind zum Variieren eines Winkels der Aufnahmeeinheiten (10, 20) zueinander, wobei die Aufnahmeeinheiten (10, 20) in der Klemmstellung drehsicher fixiert sind, wobei die erste Aufnahmeeinheit (10) eine erste Reibfläche (12) aufweist und die zweite Aufnahmeeinheit (20) eine zweite Reibfläche (22) aufweist, wobei zumindest eine der ersten Reibfläche (12) und der zweiten Reibfläche (22) eine oder mehrere konzentrisch zu der Drehachse (A1) verlaufende Federn (30) und die andere der ersten Reibfläche (12) und der zweiten Reibfläche (22) eine oder mehrere konzentrisch zu der Drehachse (A1) verlaufende, zu der einen oder den mehreren Federn (30) korrespondierende Nuten (40) aufweist, wobei in der Klemmstellung die erste Aufnahmeeinheit (10) und die zweite Aufnahmeeinheit (20) entlang der Drehachse (A1) aneinander gepresst sind, derart, dass die eine oder die mehreren Federn (30) der jeweiligen Reibfläche (12, 22) kraftschlüssig mit den einen oder den mehreren Nuten (40) der jeweils anderen Reibfläche (12, 22) zusammenwirken zum drehsicheren Fixieren der Aufnahmeeinheiten (10, 20), wobei zwischen der ersten Aufnahmeeinheit (10) und der zweiten Aufnahmeeinheit (20) eine parallel zu der Drehachse (A1) wirkende Rückstelleinrichtung (50) angeordnet ist, wobei die Rückstelleinrichtung (50) ein oder mehrere Federkraftelemente (51) umfasst, wobei das Überführen der ersten Aufnahmeeinheit (10) und der zweiten Aufnahmeeinheit (20) von der Losstellung in die Klemmstellung entgegen der Federkraft des einen oder der mehreren Federkraftelemente (51) erfolgt.

2. Stangenverbindereinrichtung (1) nach Anspruch 1, wobei die Rückstelleinrichtung (50) ein Tellerfederpaket (52) mit mehreren als Tellerfedern ausgebildeten Federkraftelementen (51) aufweist.

3. Stangenverbindereinrichtung (1) nach Anspruch 1 oder 2, wobei die Stangenverbindereinrichtung (1) eine Betätigungseinrichtung (60) aufweist zum Überführen der ersten Aufnahmeeinheit (10) und der zweiten Aufnahmeeinheit (20) von der Losstellung in die Klemmstellung entlang der Drehachse (A1) und Halten der Aufnahmeeinheiten (10, 20) in der Klemmenstellung entgegen der Federkraft des einen oder der mehreren Federkraftelemente (51), wobei die Betätigungseinrichtung (60) ein die erste Aufnahmeeinheit (10) entlang der Drehachse (A1) durchsetzendes Achselement (61) aufweist, vorzugsweise die erste Aufnahmeeinheit (10) in der Losstellung drehbar auf dem Achselement (61) gelagert ist.

4. Stangenverbindereinrichtung (1) nach Anspruch 3, wobei das Achselement (61) einen Gewindeabschnitt (63) aufweist, wobei die zweite Aufnahmeeinheit (20) einen Gegengewindeabschnitt (23) aufweist, wobei das Achselement (61) mit seinem Gewindeabschnitt (63) in den Gegengewindeabschnitt (23) eingeschraubt ist, wobei eine Achse des Achselements (61) mit der Drehachse (A1) zusammenfällt.

5. Stangenverbindereinrichtung (1) nach Anspruch 4, wobei das Achselement (61) als Schraube ausgebildet ist.

6. Stangenverbindereinrichtung (1) nach einem der Ansprüche 3 bis 5, wobei die Betätigungseinrichtung (60) einen mit dem Achselement (61) zusammenwirkenden Betätigungshebel (62) aufweist zum Überführen der ersten Aufnahmeeinheit (10) und der zweiten Aufnahmeeinheit (62) von der Losstellung in die Klemmstellung.

7. Stangenverbindereinrichtung (1) nach einem der Ansprüche 3 bis 6, wobei das Achselement (61) das eine oder die mehreren Federkraftelemente (51) durchsetzt.

8. Stangenverbindereinrichtung (1) nach Anspruch 7, wobei das eine oder die mehreren Federkraftelemente (51) an dem Achselement (61) axial gesichert sind.

9. Stangenverbindereinrichtung (1) nach einem der Ansprüche 1 bis 8, wobei die erste Aufnahmeeinheit (10) und/oder die zweite Aufnahmeeinheit (20) eine in Richtung der jeweils anderen Aufnahmeeinheit (20, 10) offene Lagertasche (15) für das eine oder die mehreren Federkraftelemente (51) aufweist.

10. Stangenverbindereinrichtung (1) nach einem der Ansprüche 1 bis 9, wobei in der Klemmstellung die erste Aufnahmeeinheit (10) und die zweite Aufnahmeeinheit (20) durch eine Selbsthemmung der einen oder der mehreren Federn (30) in der einen oder den mehreren Nuten (40) verdrehsicher gehalten sind.

11. Stangenverbindereinrichtung (1) nach einem der Ansprüche 1 bis 10, wobei die eine oder die mehreren Federn (30) im Querschnitt keilförmig ausgebildet sind mit einem ersten Keilwinkel (W1), wobei der erste Keilwinkel (W1) von 10° bis 30° beträgt, und/oder wobei die eine oder die mehreren Nuten (40) im Querschnitt keilförmig ausgebildet sind mit einem zweiten Keilwinkel (W2), wobei der zweite Keilwinkel (W2) von 10° bis 30° beträgt.

12. Stangenverbindereinrichtung (1) nach einem der Ansprüche 1 bis 11, wobei die eine oder die mehreren Federn (30) im Querschnitt kegelstumpfförmig ausgebildet sind und/oder wobei die eine oder die mehreren Nuten (40) im Querschnitt kegelstumpfförmig ausgebildet sind.

13. Stangenverbindereinrichtung (1) nach einem der Ansprüche 1 bis 12, wobei die eine oder die mehreren Nuten (40) einen Nutboden (41) aufweisen, wobei in der Klemmstellung die einen oder die mehreren Federn (30) in einer Richtung parallel zu der Drehachse (A1) von dem Nutboden (41) der einen oder der mehreren Nuten (40) beabstandet sind.

14. Stangenverbindereinrichtung (1) nach einem der Ansprüche 1 bis 13, wobei die Stangenaufnahme (11) der ersten Aufnahmeeinheit (10) und/oder wobei die Stangenaufnahme (21) der zweiten Aufnahmeeinheit (20) eine von einer umlaufende Wandung begrenzte Aufnahmeöffnung für die jeweilige Stange (2; 3) aufweisen, wobei die Wandung geschlitzt ausgebildet ist, um ein Verengen der Aufnahmeöffnung zu ermöglichen zwecks klemmender Fixierung der jeweiligen Stange (2; 3) in der jeweiligen Aufnahmeeinheit (10, 20).

15. Verfahren zum Halten eines Endgeräts (5) an einem Rollstuhl (80), wobei zum Halten des Endgeräts (5) ein Gestänge an dem Rollstuhl (80) befestigt wird, wobei das Gestänge zumindest eine erste Stange (2) und eine zweite Stange (3) aufweist, wobei die erste Stange (2) und die zweite Stange (3) über eine Stangenverbindereinrichtung (1) nach einem der vorigen Ansprüche miteinander verbunden sind.
